# EUROPÄISCHE PATENTSCHRIFT

(11) **EP 2 037 792 B1**
(45) Veröffentlichungstag und Bekanntmachung des Hinweises auf die Patenterteilung: **23.12.2009**
(21) Anmeldenummer: 07765745.0
(22) Anmeldetag: 29.06.2007
(51) Int. Cl.: A47L 9/00, F16K 15/02

(54) **NEBENLUFTVENTIL**
SUPPLEMENTARY AIR VALVE
VANNE À AIR ADDITIONNEL

(30) Priorität: 30.06.2006 DE 102006030227
(43) Veröffentlichungstag der Anmeldung: 25.03.2009
(73) Patentinhaber: BSH Bosch und Siemens Hausgeräte GmbH, 81739 München (DE)
(72) Erfinder: WEIGAND, Artur, 97618 Niederlauer (DE); SEITH, Thomas, 97616 Bad Neustadt (DE); SCHWARZ, Heribert, 97616 Bad Neustadt (DE); SEUFERT, Herbert, 97654 Bastheim (DE)
(86) Internationale Anmeldenummer: PCT/EP2007/056597
(87) Internationale Veröffentlichungsnummer: WO 2008/000829

(56) Entgegenhaltungen:
- DE-A1-102004 050 017
- DE-U1- 20 108 618
- JP-A- 4 005 935
- US-A- 2 507 043
- US-A- 4 176 680

## Beschreibung

Die vorliegende Erfindung betrifft ein Nebenluftventil, welches insbesondere für Staubsauger geeignet ist.

Bei normalem Saugbetrieb eines Staubsaugers verläuft der Saugluftstrom durch den Saugschlauch in die Staubkammer. Auch bei normalem Betrieb, z.B. bei Verwendung der Düse auf Teppich, kann es jedoch zu Störungen des Saugbetriebs aufgrund von Verstopfungen im Ansaugbereich, z.B. in der Düse, im Schlauch, im Filter oder im Saugschlauch, kommen. Dabei bildet sich ein erhöhter Unterdruck in den in der Regel aus Kunststoff gefertigten mechanischen Teilen des Staubsaugers, welche den Saugluftstrom führen. Zudem kann es auch zu einer erhöhten thermischen Belastung der Kunststoffteile kommen, insbesondere in der Staubkammer und der Ausblaszone.

Für Staubsauger mit einer Leistung von unter 2000 W wurden bereits Nebenluftventile entwickelt. Derartige Nebenluftventile weisen Nebenluftöffnungen auf, welche Kühlluft von außen in den Saugstrom hineinführen. Diese Ventile haben jedoch relativ kleine Nebenluftöffnungen, die nur wenig Kühlluft durchlassen, und können daher nicht für Geräte mit einer höheren Leistung (über 2000 W) eingesetzt werden (die Erwärmung der Kunststoffteile wäre zu hoch).

Aus diesem Grund verwendet man für Geräte mit höherer Leistung eine relativ große Nebenluftöffnung, die in allen Betriebszuständen den Saugstrom mit Kühlluft versorgt. Diesbezüglich sei beispielsweise auf die DE 10 2004 050 017 A1 verwiesen. Bei einer solchen ständig geöffneten Nebenluftöffnung geht bedingt durch die Nebenluft (Druckverlust im Staubraum / Vakuum) ein hoher Anteil der Saugleistung an der Düse verloren. Außerdem führen große Nebenluftöffnungen zu verstärkten Betriebsgeräuschen (Luftrauschen an der Nebenluftöffnung).

Weitere Nebenluftventile sind beispielsweise aus der DE 10 2004 040 985 A1, der DE 78 25 557 U1 oder der DE 20 17 107 A1 bekannt.

Die Aufgabe der vorliegenden Erfindung ist die Bereitstellung eines Nebenluftventils, welches die Nachteile der aus dem Stand der Technik bekannten Nebenluftventile zumindest teilweise beseitigt.

Gelöst wird diese Aufgabe durch ein Nebenluftventil und einen Staubsauger umfassend ein erfindungsgemäßes Nebenluftventil gemäß den beigefügten unabhängigen Ansprüchen. Die Unteransprüche betreffen bevorzugte Ausführungsformen, welche einzeln oder in Kombination miteinander eingesetzt werden können.

Das erfindungsgemäße Nebenluftventil für einen Staubsauger umfasst ein Gehäuse mit mindestens einer seitlich am Gehäuse angeordneten Nebenluftöffnung und mindestens einer an der Oberseite des Gehäuses ausgebildeten Ventilöffnungsbohrung, sowie ein Verschlusselement und ein Federelement, welches das Verschlusselement gegen die mindestens eine Ventilöffnungsbohrung presst, so dass die mindestens eine Ventilöffnungsbohrung sowie die mindestens eine Nebenluftöffnung verschließbar sind, wobei die Druckkraft des Federelementes höher ist als der Unterdruck, der durch die bei normalem Betrieb des Staubsaugers vorbestimmte Saugkraft entsteht, und wobei bei gestörtem Betrieb des Staubsaugers der auf das Verschlusselement einwirkende Unterdruck höher ist als die Druckkraft des Federelementes, so dass ein zusätzlicher Luftweg über die mindestens eine Ventilöffnungsbohrung und die mindestens eine Nebenluftöffnung geöffnet wird.

Der Vorteil eines solchen Ventils ist, dass bei gestörtem Betrieb eines Staubsaugers aufgrund sehr starker Drosselung des Saugluftstromes, z.B. bei Verstopfung im Ansaugbereich (Düse, Rohr, Schlauch, Filter), ein zusätzlicher Luftweg (Nebenluftöffnung) geöffnet wird. Durch diese Nebenluftöffnung strömt dann Nebenluft. Die Nebenluft vermindert die thermische Belastung der Kunststoffteile, insbesondere im Staubraum und der Ausblaszone, und zusätzlich wird durch die Reduzierung des Unterdruckwertes im Staubsaugerinneren, insbesondere im Staubraum, die mechanische Belastung erheblich reduziert. Das Ventil ist vorzugsweise so ausgestaltet, dass es die Nebenluftöffnungen nur im Bedarfsfall öffnet und bei normalem Unterdruck (der bei normalem Betrieb vorgesehen ist), wieder schließt. Der normale Betrieb wird definiert als die normale Saugleistung der Düse eines Staubsaugers auf Normteppich.

Erfindungsgemäß bevorzugt weist das Verschlusselement Luftdurchgangsöffnungen aufweist, durch welche bei Öffnung des Nebenluftventils die durch die mindestens eine Ventilöffnungsbohrung und die mindestens eine Nebenluftöffnung eintretende Luft in das Innere des Nebenluftventils und durch dieses hindurchströmen kann.

Das Ventilgehäuse kann aus einem Stück gefertigt sein, oder aus mehreren Teilen bestehen. Es ist vorzugsweise aus einem Oberteil und einem Unterteil gefertigt, welche in ihrer Außenkontur passgenau aufeinander abgestimmt sind. Die beiden Teile und sind vorzugsweise fest miteinander verbunden, z.B. durch Schweißung, Klebung, Rastung u. dgl. und bilden zusammen das Ventilgehäuse.

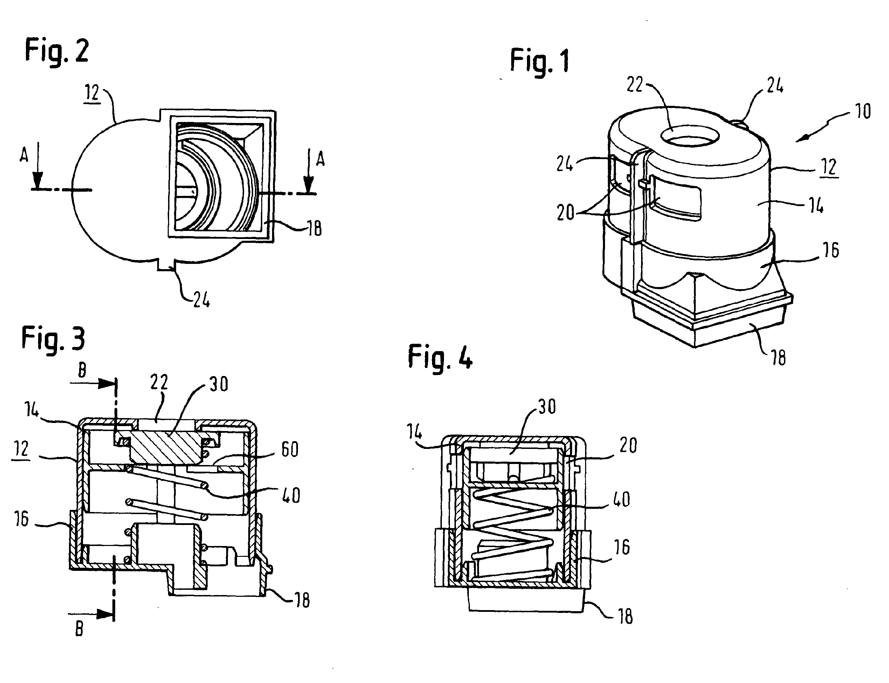

Das Ventilgehäuse kann jede beliebige Form haben. Vorteilhaft sind runde beziehungsweise ovale Formen. Da das Ventilgehäuse aufgrund der Tatsache, dass es dem in Staubsauger entstehenden Unterdruck ausgesetzt wird, mechanisch stark beansprucht wird (Verformungen/Deformationen), können zusätzliche Verstärkungen des Gehäuses vorgesehen sein, z.B. Stützrippen und dergleichen. In einer bevorzugten Ausführungsform ist daher das Gehäuse in Form einer Acht ausgeführt (siehe z.B. Fig. 1) und vorzugsweise mit seitlichen Stützrippen verstärkt.

Der untere Teil des Ventilgehäuses ist vorzugsweise mit einem Anschlusselement, z.B. einem Anschlussflansch, versehen, welches das Anbringen des Ventils im Staubsauger ermöglicht. Der untere Teil des Gehäuses ist daher zweckmäßiger Weise aus einem dichtenden Material gefertigt, vorzugsweise weicher Kunststoff, Gummi, Zweikomponentenkunststoff oder dergleichen. Hierdurch passt sich der untere Teil des Gehäuses besser an das Oberteil an, und das Anschlusselement kann besser am Staubsauger befestigt werden.

Das Ventilgehäuse umfasst eine Ventilöffnungsbohrung, welche im geschlossenen Zustand des Ventils durch ein Verschlusselement verschlossen ist. Die Ventilöffnungsbohrung befindet sich im Saugluftstrom bzw. ist diesem ausgesetzt. Das Ventil ist so angeordnet, dass der im Innern des Staubsaugers durch den Betrieb aufgebaute Unterdruck dazu führt, dass Luft durch die Ventilöffnungsbohrung durch das Ventil strömt, wenn die Ventilöffnungsbohrung nicht verschlossen ist.

Das Verschlusselement ist so gebildet, dass es in der Lage ist, bei geschlossenem Ventil gleichzeitig die Ventilöffnungsbohrung und die Nebenluftöffnungen zu verschließen. Es kann die Form einer Platte oder eines Deckels oder jegliche andere Form haben.

Vorzugsweise handelt es sich bei dem Verschlusselement um einen Kolben. Vorzugsweise ist der Kolben hohl. In einer besonders bevorzugten Ausführungsform ist das Verschlusselement bzw. der Kolben in seiner Außenkontur genau auf die Innenkontur des Gehäuses, vorzugsweise des Oberteils abgestimmt und ist innerhalb des Gehäuses bzw. Oberteils verschiebbar. Der Kolben kann optional über Führungen im Inneren des Gehäuses geführt werden. Wenn das Verschlusselement die Form eines Kolbens hat, der entlang der Innenkontur des Gehäuses geführt wird, so weist der Kolben vorteilhafter Weise Luftdurchgangsöffnungen auf, durch welche die durch die Ventilöffnungsbohrung eintretende Luft ins Innere des Ventils und durch dieses hindurch strömen kann. Vorzugsweise sind die Luftdurchgangsöffnungen durch Schlitze oder Aussparungen in der Seite des Kolbens gebildet, welche als Verschlusselement für die Ventilöffnungsbohrung dient.

Das Ventilgehäuse und der Kolben können auch konische Form haben. Der Vorteil dieser Ausführung ist, dass der Kolben beim Ansprechen sofort frei fährt (der Luftspalt zur Innenkontur im Oberteil vergrößert sich sofort).

Erfindungsgemäß bevorzugt sind an der Innenseite des Hohl-Kolbens Prallflächen vorgesehen, so dass der zunächst durch die mindestens eine Ventilöffnungsbohrung hindurch tretende Luftstrom an den Prallflächen umgelenkt wird.

Es ist weiterhin ein Federelement, vorzugsweise eine Feder, vorzugsweise eine Druckfeder, z.B. eine Wendelfeder, vorgesehen, welches in der Lage ist, das Verschlusselement gegen eine Seite des Gehäuses zu pressen und dadurch die Ventilöffnungsbohrung und die Nebenluftöffnungen zu verschließen.

Vorzugsweise befindet sich die Ventilöffnungsbohrung an der Oberseite des Ventils, bzw. ist so angeordnet, dass das Verschlusselement durch das Federelement gegen die Ventilöffnungsbohrung gedrückt wird.

Die eine oder mehrere Nebenluftöffnungen befinden sich vorzugsweise seitlich im Gehäuse. Sie sind vorzugsweise so angeordnet, dass sie nicht sofort geöffnet werden, wenn sich das Verschlusselement aus der geschlossenen Position in eine leicht geöffnete Position bewegt, sondern erst nach einer gewissen Wegstrecke des Verschlusselements. Die Nebenluftöffnungen können jedwede Form aufweisen, z.B. rund, oval oder eckig, vorzugsweise rechteckig.

Wenn es sich bei dem Verschlusselement um ein Kolbenelement handelt, so befindet sich das Federelement vorzugsweise im Innern des Kolbens. Eine solche Anordnung ist Platz sparend und somit von Vorteil.

Das erfindungsgemäße Ventil ist so gebildet, dass es an das Innere eines Staubsaugers, in dem der durch die Saugleistung entstehende Unterdruck herrscht, angeschlossen werden kann. Vorteilhafterweise wird das Ventil über das Anschlusselement angeschlossen, mit welcher das Ventil mit dem Staubsauger so verbunden ist, dass der durch die Saugkraft des Staubsaugers entstehende Unterdruck auf das Verschlusselement einwirkt und der Kraft des Federelements entgegenwirkt. Das Anschlusselement besteht aus einer Öffnung zum Inneren des Ventils und ist vorteilhafter Weise als Flansch ausgebildet.

Wenn der Staubsauger, welcher ein erfindungsgemäßes Nebenluftventil aufweist, in Betrieb ist, so bildet sich ein Unterdruck im Inneren des Staubsaugers. Wenn sich in diesem Unterdruckraum z.B. durch eine Verstopfung im Saugschlauch, in der Düse, oder einer anderen Stelle des Saugstroms, ein höherer Unterdruck aufbaut als bei normalem Betrieb, so wirkt dieser erhöhte Druck auf das Verschlusselement in dem erfindungsgemäßen Nebenluftventil ein. Dadurch wird das Federelement mit einer Gegenkraft belastet. Übersteigt diese Gegenkraft die Kraft des Federelementes, so bewegt sich das Verschlusselement in die entgegen gesetzte Richtung als vom Federelement vorgegeben. Dabei öffnet sich die Ventilöffnungsbohrung. Dabei kann bereits Umgebungsluft bzw. Nebenluft durch das Ventil und durch die Verbindungseinrichtung in den Unterdruckraum des Staubsaugers strömen. Unmittelbar nach dem Ablösen des Verschlusselements von der Ventilöffnungsbohrung, oder auch nach einer Teilwegstrecke des Verschlusselements können die Nebenluftöffnungen durch die Bewegung des Verschlusselements zumindest teilweise freigegeben werden. Das Verschlusselement befindet sich dann in seiner ersten geöffneten Position.

Sobald über die Nebenluftöffnungen Umgebungsluft bzw. Nebenluft einströmen kann, bewegt sich das Verschlusselement auf seine zweite geöffnete Position bei geöffnetem Ventil zu. Dabei werden die Nebenluftöffnungen freigegeben. Durch den Druck geschieht dies vorzugsweise schlagartig. Um zu verhindern, dass das Verschlusselement flattert oder stottert, sind vorzugsweise Prallflächen im Kolben vorgesehen.

Der Ansprechpunkt, ausgedrückt in mbar Unterdruck, des Ventils wird durch die Kraft des Federelements in Verbindung mit der Größe der Ventilöffnungsbohrung bestimmt. Das Federelement hat vorzugsweise eine Druckkraft von etwa 200 mbar, vorzugsweise zwischen 180 und 220 mbar. Sobald sich der Unterdruck im Staubsauger wieder normalisiert und wieder unter den Ansprechpunkt des Ventils fällt, so bewegt sich das Verschlusselement wieder in seine Ausgangsposition zurück in welcher es die Nebenluftöffnungen und die Ventilöffnungsbohrung verschließt. Der Staubsauger kann dann wieder seine volle Saugleistung erbringen bei kleinstmöglichem Betriebsgeräusch.

Es ist erfindungsgemäß bevorzugt, dass der Luftstrom, welcher durch die Ventilöffnungsbohrung eintritt, aus einem anderen Raum stammt als die Luft, welche die die Nebenluftöffnungen eintritt. Das Nebenluftventil der vorliegenden Erfindung ist vorzugsweise im Staubsauger so angeordnet, dass die Luft, welche als Nebenluft hineinströmen kann, aus der Kabeltrommel entnommen wird. Die Nebenluft kann auch aus einem anderen Raum stammen, welcher direkt mit der Umgebungsluft in Verbindung steht.

Ein Nebenluftventil gemäß der vorliegenden Erfindung hat zum Vorteil, dass bei sehr starker Drosselung des Saugluftstromes eines Staubsaugers (also bei Störbetrieb), z.B. aufgrund von Verstopfungen im Ansaugbereich (Düse, Rohr, Schlauch, Filter), ein zusätzlicher Luftweg (Nebenluftöffnung) geöffnet wird, welcher einerseits die thermische Belastung der Kunststoffteile verhindert, insbesondere im Staubraum und der Ausblaszone, sowie zusätzlich durch die Reduzierung des Unterdruckwertes im Staubsaugerinneren, insbesondere im Staubraum, die mechanische Belastung erheblich reduziert.

Im Folgenden wird die Erfindung anhand bevorzugtes Ausführungsbeispiele unter Bezugnahme auf die Zeichnung näher erläutert.

### Darin zeigen schematisch:

- Fig. 1: ein erfindungsgemäßes Nebenluftventil in einer perspektivischen Ansicht;
- Fig. 2: das Nebenluftventil nach Fig. 1 in einer Draufsicht;
- Fig. 3: das Nebenluftventil nach Fig. 2 in einer Schnittseitenansicht entlang der Linie A-A im geschlossenen Zustand;
- Fig. 4: das Nebenluftventil nach Fig. 3 in einer Schnittseitenansicht entlang der Linie B-B im geschlossenen Zustand;
- Fig. 5: das Nebenluftventil nach Fig. 2 in einer Schnittseitenansicht entlang der Linie A-A im geöffneten Zustand;
- Fig. 6: das Nebenluftventil nach Fig. 3 in einer Schnittseitenansicht entlang der Linie B-B im geöffneten Zustand;
- Fig. 7: das Nebenluftventil nach Fig. 1 beispielhaft verbaut in einem Staubsauger;
- Fig. 8A: das Verschlusselement eines Nebenluftventils nach Fig. 1 bis 7 in einer perspektivischen Draufsicht;
- Fig. 8B: das Verschlusselement eines Nebenluftventils nach Fig. 1 bis 7 in einer perspektivischen Unteransicht; und
- Fig. 9A-C: das Funktionsprinzip eines Nebenluftventils nach Fig. 1 bis 7.

Bei der nachfolgenden Figurenbeschreibung bezeichnen gleiche Bezugszeichen gleiche oder vergleichbare Bauteile.

Fig. 1 zeigt eine perspektivische Ansicht eines Nebenluftventils 10 der vorliegenden Erfindung. Das Ventil 10 besitzt ein Gehäuse 12, welches in Fig. 1 die Form bzw. Kontur einer "acht" aufweist. Alternativ hierzu kann das Ventilgehäuse 12 auch eine runde oder ovale Kontur-Form aufweisen (nicht dargestellt). In der Taille der "acht" beispielsweise und/oder an anderer Stelle (nicht dargestellt) sind Stützrippen 24 vorgesehen, welche die Gehäusewände des Ventils 10 insb. gegenüber dem im Ventil 10 kurz vor dessen Ansprechpunkt herrschenden Maximalunterdruck stabilisieren. Das Ventilgehäuse 12 besteht des Weiteren aus zwei Teilen 14, 16, einem Oberteil 14 und einem Unterteil 16. Ober- 14 und Unterteil 16 sind luftdicht miteinander verbunden. Am unteren Teil 16 ist ein Abschlussflansch 18 angebracht, welcher bevorzugt aus einem gegenüber dem Material des Gehäuses 12 weicheren, insbesondere Gummi enthaltenden, Material gefertigt ist, beispielsweise im Rahmen eines 2 Komponenten-Kunststoffspritzgussverfahrens. Seitlich am oberen Teil 14 des Gehäuses 12 sind jeweils zwei Nebenluftöffnungen 20 ausgebildet, von denen in der in Fig. 1 dargestellten Ansicht nur zwei sichtbar sind. Zudem befindet sich am oberen Teil des Gehäuses 12 eine Ventilöffnungsbohrung 22, deren Querschnitt auf die jeweilige Motorleistung abstimmbar ist.

Fig. 2 zeigt eine Draufsicht der Unterseite des Nebenluftventils 10 der vorliegenden Erfindung. Deutlich erkennbar ist der Abschlussflansch 18, mit dem das Ventil 10 in einem Staubsauger angeschlossen werden kann.

Fig. 3 zeigt eine Querschnittsansicht entlang der Schnittlinie A-A aus Fig. 2. In dieser Darstellung ist das Ventil 10 geschlossen. Dabei drückt eine Druckfeder 40 einen Kolben 30 gegen die Ventilöffnungsbohrung 22. Anstatt den Querschnitt der Ventilöffnungsbohrung 22 auf die jeweilige Motorleistung abzustimmen können alternativ oder kumulativ die Federkraft der Druckfeder 40 auf die jeweilige Motorleistung abgestimmt sein.

Der Kolben 30 weist Prallflächen 60 auf, welche 60 zugleich ein "stottern" des Kolbens 30 verhindern bzw. diesen 30 vorteilhaft in seiner Offenstellung halten, da mehr Kühlluft durch die Nebenluftöffnungen 20 über die Prallflächen 60 in das Ventil 10 einströmt.

Fig. 4 zeigt eine Querschnittsansicht entlang der Schnittlinie B-B aus Fig. 3. In dieser Darstellung ist das Ventil 10 geschlossen.

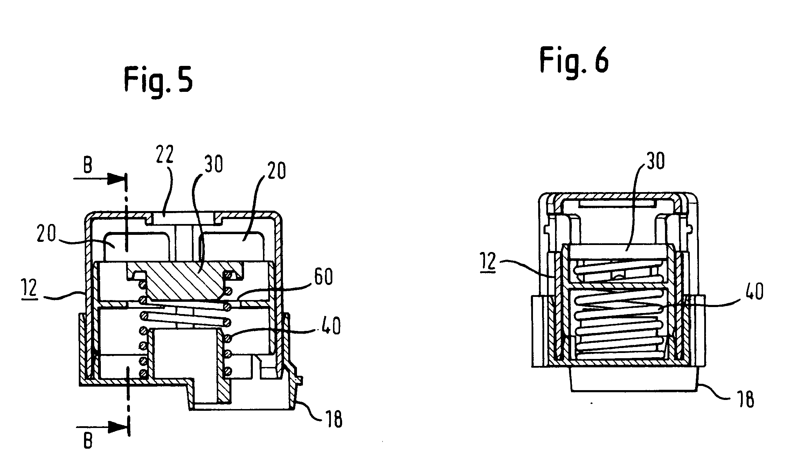

Fig. 5 zeigt eine Querschnittsansicht entlang der Schnittlinie A-A aus Fig. 2. In dieser Darstellung ist das Ventil 10 geöffnet.

Fig. 6 zeigt eine Querschnittsansicht entlang der Schnittlinie B-B aus Fig. 5. In dieser Darstellung ist das Ventil 10 geöffnet. Nun kann Luft durch die Ventilöffnungsbohrung 22 und die Nebenluftöffnungen 20 einströmen.

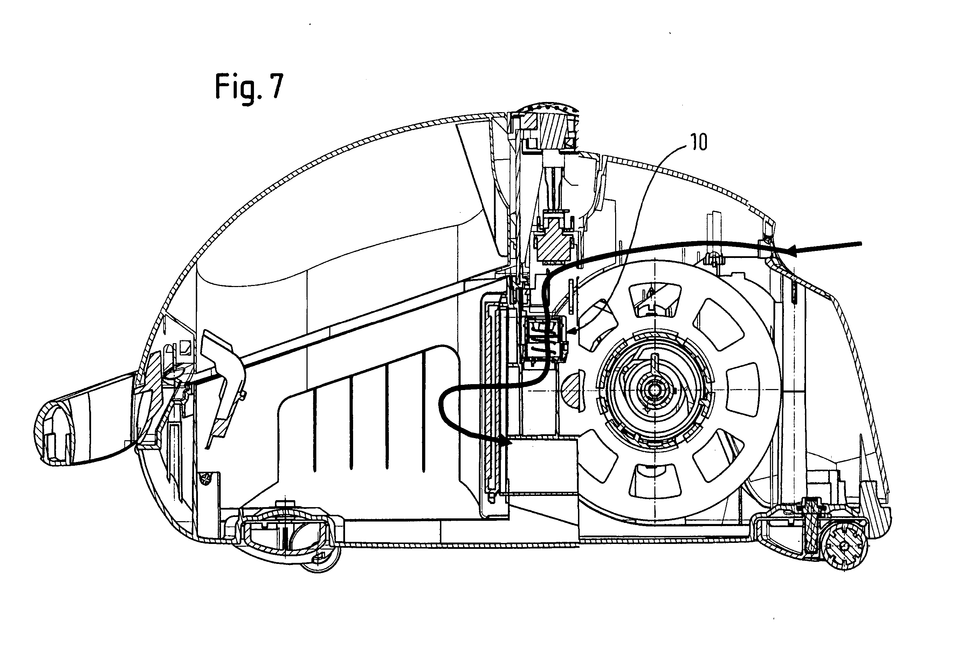

Fig. 7 zeigt eine Querschnittsansicht eines Staubsaugers mit einem verbauten Nebenluftventil 10 der vorliegenden Erfindung.

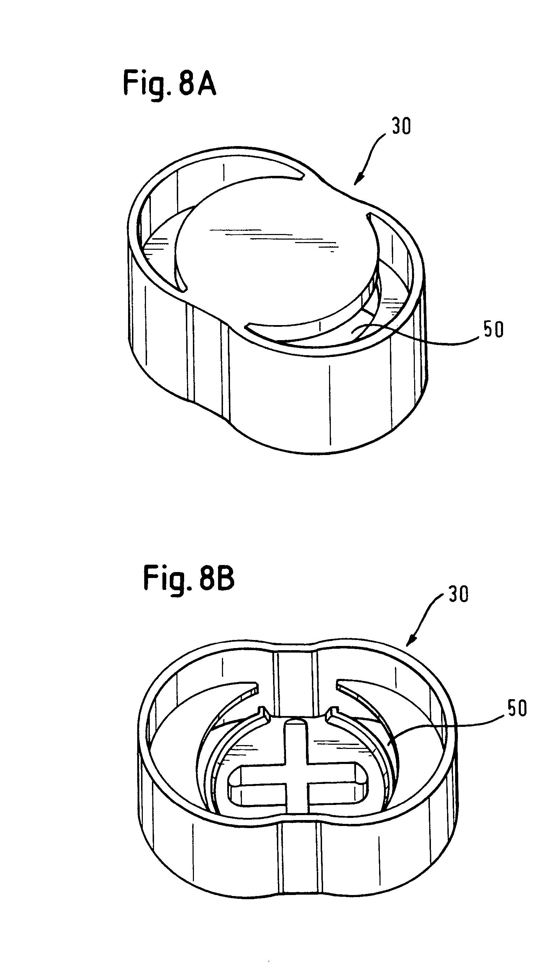

Fig. 8 A und B zeigen je eine Draufsicht von oben und eine Draufsicht von unten auf ein erfindungsgemäßes Verschlusselement 30 in Form eines Kolbens. Die Oberseite des Kolbens 30 weist Luftdurchgangsöffnungen 50 auf, durch welche die durch die Ventilöffnungsbohrung 22 eintretende Luft in den Kolben 30 strömen kann.

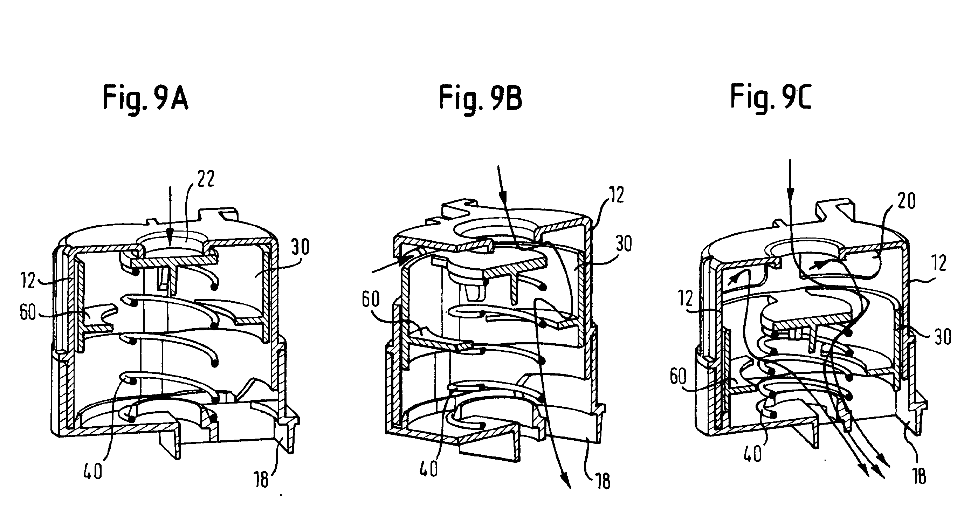

Das Funktionsprinzip des erfindungsgemäßen Nebenluftventils 10 für Staubsauger sei abschließend anhand von Fig. 9 verdeutlicht. In Fig. 9A sind die Luftwege (Steuer- wie auch Kühlstrom) durch das Ventil 10 zunächst mittels des Verschlusselements 30 geschlossen. Wird die auch als Steueröffnung bezeichnete Ventilöffnungsbohrung 22 mit einem Unterdruck größer als ca. 200 mbar beaufschlagt, beginnt sich das als Kolben 30 ausgebildete Verschlusselement zu öffnen. Mit anderen Worten: bei Überschreitung der Druckkraft des Federelementes 40 durch den durch die Saugkraft entstehenden Druck wandert das Verschlusselement 30 in eine erste Position, in der die Ventilöffnungsbohrung 22 freigegeben wird. Soweit Prallflächen 60 vorgesehen sind, wird der zunächst durch die mindestens eine Ventilöffnungsbohrung 22 hindurch tretende Luftstrom an den Prallflächen 60 umgelenkt. Die bei Überschreitung der Druckkraft des Federelementes 40 durch die Ventilöffnungsbohrung 22 einströmende Luft bewirkt dann, dass das Verschlusselement 30 in eine zweite Position wandert, in der die Nebenluftöffnungen 20 freigegeben werden. In Folge dessen bewegt sich der Ventilkolben 30 schlagartig nach unten und gibt die seitlich im Gehäuse 12 des Ventils 10 ausgebildeten Nebenluftöffnungen 20 für den Kühlstrom frei. Dadurch steht schlagartig wesentlich mehr Kühlluft zur Verfügung, als bei herkömmlichen Ventilen. Fig. 9B zeigt den/die Luftweg/e durch das teilweise geöffnete Ventil 10; Fig. 9C den/die Luftweg/e durch das vollständig geöffnete Ventil 10.

Das Nebenluftventil 10 gemäß der vorliegenden Erfindung hat zum Vorteil, dass bei sehr starker Drosselung des Saugluftstromes eines Staubsaugers (also bei Störbetrieb), z.B. aufgrund von Verstopfungen im Ansaugbereich (Düse, Rohr, Schlauch, Filter), ein zusätzlicher Luftweg (Nebenluftöffnung) geöffnet wird, welcher einerseits die thermische Belastung der Kunststoffteile verhindert, insbesondere im Staubraum und der Ausblaszone, sowie zusätzlich durch die Reduzierung des Unterdruckwertes im Staubsaugerinneren, insbesondere im Staubraum, die mechanische Belastung erheblich reduziert.

Die vorliegende Erfindung eignet sich insbesondere für Staubsauger mit einer Leistung von über 2000 W.

### Bezugszeichenliste

- 10: Nebenluftventil
- 12: Gehäuse
- 14: Oberteil
- 16: Unterteil
- 18: Anschlusselement
- 20: Nebenluftöffnung
- 22: Ventilöffnungsbohrung
- 24: Stützrippen
- 30: Verschlusselement
- 40: Federelement
- 50: Luftdurchgangsöffnungen
- 60: Prallflächen

## Patentansprüche

1. Nebenluftventil (10) für einen Staubsauger, umfassend ein Gehäuse (12) mit mindestens einer seitlich am Gehäuse (12) angeordneten Nebenluftöffnung (20) und mindestens einer an der Oberseite des Gehäuses (12) ausgebildeten Ventilöffnungsbohrung (22), sowie einem Verschlusselement (30) und einem Federelement (40), welches das Verschlusselement (30) gegen die mindestens eine Ventilöffnungsbohrung (22) presst, so dass die mindestens eine Ventilöffnungsbohrung (22) sowie die mindestens eine Nebenluftöffnung (20) verschließbar sind, wobei die Druckkraft des Federelementes (40) höher ist als der Unterdruck, der durch die bei normalem Betrieb des Staubsaugers vorbestimmte Saugkraft entsteht, und wobei bei gestörtem Betrieb des Staubsaugers der auf das Verschlusselement (30) einwirkende Unterdruck höher ist als die Druckkraft des Federelementes (40), so dass ein zusätzlicher Luftweg über die mindestens eine Ventilöffnungsbohrung (22) und die mindestens eine Nebenluftöffnung (20) geöffnet wird.

2. Nebenluftventil (10) nach Anspruch 1, **dadurch gekennzeichnet, dass** das Verschlusselement (30) Luftdurchgangsöffnungen (50) aufweist, durch welche bei Öffnung des Nebenluftventils (10) die durch die mindestens eine Ventilöffnungsbohrung (22) und die mindestens eine Nebenluftöffnung (20) eintretende Luft in das Innere des Nebenluftventils (10) und durch dieses hindurchströmen kann.

3. Nebenluftventil (10) nach Anspruch 1 oder 2, **dadurch gekennzeichnet, dass** das Verschlusselement (30) in seiner Außenkontur an die Innenkontur des Gehäuses (12) angepasst ist.

4. Nebenluftventil (10) nach Anspruch 3, **dadurch gekennzeichnet, dass** das Gehäuse (12) und das Verschlusselement (30) eine konische Form aufweisen.

5. Nebenluftventil (10) nach einem der Ansprüche 1 bis 4, **dadurch gekennzeichnet, dass** das Verschlusselement (30) die Form einer Platte oder eines Deckels aufweist.

6. Nebenluftventil (10) nach einem der Ansprüche 1 bis 4, **dadurch gekennzeichnet, dass** das Verschlusselement (30) die Form eines Kolbens (30) aufweist.

7. Nebenluftventil (10) nach Anspruch 6, **dadurch gekennzeichnet, dass** der Kolben (30) die Gestalt eines Hohl-Kolbens aufweist.

8. Nebenluftventil (10) nach Anspruch 7, **dadurch gekennzeichnet, dass** an der Innenseite des Hohl-Kolbens (30) Prallflächen (60) vorgesehen sind, so dass der zunächst durch die mindestens eine Ventilöffnungsbohrung (22) hindurch tretende Luftstrom an den Prallflächen (60) umgelenkt wird.

9. Nebenluftventil (10) nach einem der vorhergehenden Ansprüche, **dadurch gekennzeichnet, dass** der Ansprechpunkt des Ventils, bei dem der durch die Saugkraft entstehende Unterdruck größer ist als die Druckkraft des Federelements (40), zwischen 180 und 220 mbar, vorzugsweise etwa 200 mbar, beträgt.

10. Staubsauger umfassend ein Nebenluftventil (10) nach einem der Ansprüche 1 bis 9.

## Claims

1. Supplementary air valve (10) for a vacuum cleaner, comprising a housing (12) with at least one supplementary air opening (20) arranged laterally at the housing (12) and at least one valve opening bore (22) formed at the upper side of the housing (12), as well as a closure element (30) and a spring element (40), which presses the closure element (30) against the at least one valve opening bore (22) so that the at least one valve opening bore (22) as well as the at least one supplementary air opening (20) are closable, wherein the pressure force of the spring element (40) is higher than the sub-atmospheric pressure which arises due to the suction force predetermined in normal operation of the vacuum cleaner, and wherein when operation of the vacuum cleaner is disturbed the sub-atmospheric pressure acting on the closure element (30) is higher than the pressure force of the spring element (40) so that an additional air path via the at least one valve opening bore (22) and the at least one supplementary air opening (20) is opened.

2. Supplementary air valve (10) according to claim 1, **characterised in that** the closure element (30) has air passage openings (50) through which the air, which enters via the at least one valve opening bore (22) and the at least one supplementary air opening (20), can flow into the interior of the supplementary air valve (10) and through this when the supplementary air valve (10) is opened.

3. Supplementary air valve (10) according to claim 1 or 2, **characterised in that** the closure element (30) is matched in its outer contour to the inner contour of the housing (12).

4. Supplementary air valve (10) according to claim 3, **characterised in that** the housing (12) and the closure element (30) have a conical form.

5. Supplementary air valve (10) according to any one of claims 1 to 4, **characterised in that** the closure element (30) has the form of a plate or a cover.

6. Supplementary air valve (10) according to any one of claims 1 to 4, **characterised in that** the closure element (30) has the form of a piston (30).

7. Supplementary air valve (10) according to claim 6, **characterised in that** the piston (30) has the form of a hollow piston.

8. Supplementary air valve (10) according to claim 7, **characterised in that** baffle surfaces (60) are provided at the inner side of the hollow piston (30) so that the air flow initially passing through the at least one valve opening bore (22) is deflected at the baffle surfaces (60).

9. Supplementary air valve (10) according to any one of the preceding claims, **characterised in that** the response point of the valve at which the sub-atmospheric pressure arising due to the suction force is greater than the pressure force of the spring element (40) is between 180 and 220 millibars, preferably approximately 200 millibars.

10. Vacuum cleaner comprising a supplementary air valve (10) according to any one of claims 1 to 9.

## Revendications

1. Vanne à air additionnel (10) pour un aspirateur, comprenant une cage (12) munie d'au moins une ouverture d'air additionnel (20) disposée latéralement sur la cage (12) et d'au moins un alésage d'ouverture de vanne (22) réalisé sur le côté supérieur de la cage (12) ainsi que d'un élément de fermeture (30) et d'un élément à ressort (40), lequel presse l'élément de fermeture (30) contre l'au moins un alésage d'ouverture de vanne, de sorte que l'au moins un alésage d'ouverture de vanne (22) ainsi que l'au moins une ouverture d'air additionnel (20) peuvent être fermés, la force de compression de l'élément à ressort (40) étant supérieure à la dépression qui se produit en raison de la force d'aspiration prédéterminée lors du fonctionnement normal de l'aspirateur, et la dépression agissant sur l'élément de fermeture (30), lors du fonctionnement défaillant de l'aspirateur, étant supérieure à la force de compression de l'élément à ressort (40), de sorte qu'un trajet d'air supplémentaire est ouvert au-dessus de l'au moins un alésage d'ouverture de vanne (22) et de l'au moins une ouverture d'air additionnel (20).

2. Vanne à air additionnel (10) selon la revendication 1, **caractérisée en ce que** l'élément de fermeture (30) présente des ouvertures de passage d'air (50), à travers lesquelles, lors de l'ouverture de la vanne à air additionnel, l'air entrant à travers l'au moins un alésage d'ouverture de vanne (22) et l'au moins une ouverture d'air additionnel (20) peut circuler à l'intérieur de la vanne à air additionnel (10) et traverser celle-ci.

3. Vanne à air additionnel (10) selon la revendication 1 ou 2, **caractérisée en ce que** l'élément de fermeture (30), dans son contour extérieur, est adapté au contour intérieur de la cage (12).

4. Vanne à air additionnel (10) selon la revendication 3, **caractérisée en ce que** la cage (12) et l'élément de fermeture (30) présentent une forme conique.

5. Vanne à air additionnel (10) selon l'une quelconque des revendications 1 à 4, **caractérisée en ce que** l'élément de fermeture (30) présente la forme d'une plaque ou d'un couvercle.

6. Vanne à air additionnel (10) selon l'une quelconque des revendications 1 à 4, **caractérisée en ce que** l'élément de fermeture (30) présente la forme d'un piston (30).

7. Vanne à air additionnel (10) selon la revendication 6, **caractérisée en ce que** le piston (30) présente la forme d'un piston creux.

8. Vanne à air additionnel (10) selon la revendication 7, **caractérisée en ce que** des surfaces d'impact (60) sont ménagées sur le côté intérieur du piston creux (30), de sorte que le flux d'air traversant d'abord l'au moins un alésage d'ouverture de vanne (22) est dévié par les surfaces d'impact (60).

9. Vanne à air additionnel (10) selon l'une quelconque des revendications précédentes, **caractérisée en ce que** le point de réponse de la vanne, auquel la dépression produite en raison de la force d'aspiration est supérieure à la force de compression de l'élément à ressort (40), est situé entre 180 et 220 mbars, de préférence approximativement à 200 mbars.

10. Aspirateur comprenant une vanne à air additionnel (10) selon l'une quelconque des revendications 1 à 9.
